(19) Europäisches Patentamt
European Patent Office
Office européen des brevets

(11) Veröffentlichungsnummer : **0 442 846 A2**

(12) **EUROPÄISCHE PATENTANMELDUNG**

(21) Anmeldenummer : **91810085.0**

(22) Anmeldetag : **06.02.91**

(51) Int. Cl.[5] : **C09B 33/147,** C09B 33/06, C08K 5/23

(30) Priorität : **15.02.90 CH 484/90**

(43) Veröffentlichungstag der Anmeldung : **21.08.91 Patentblatt 91/34**

(84) Benannte Vertragsstaaten : **DE FR GB IT**

(71) Anmelder : **CIBA-GEIGY AG**
**Klybeckstrasse 141**
**CH-4002 Basel (CH)**

(72) Erfinder : **Harl, Stefan, Dr.**
**Ringstrasse 5**
**CH-4153 Reinach (CH)**
Erfinder : **von der Crone, Jost, Dr.**
**La Dey**
**CH-1732 Arconciel (CH)**

(54) **Disazoverbindungen mit langkettigen Alkylester- oder Alkylamidresten.**

(57) Verbindungen der Formel I

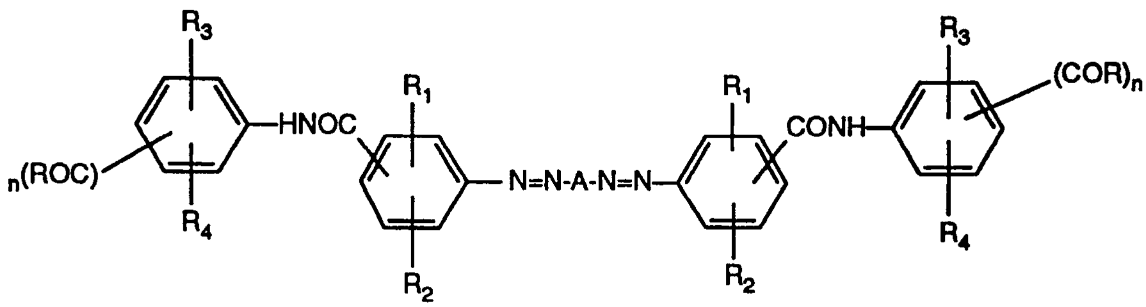

(I)

worin R für einen Rest der Formeln $-OR_5$ oder $-NHR_5$ steht, A einen Rest der Formeln II oder III

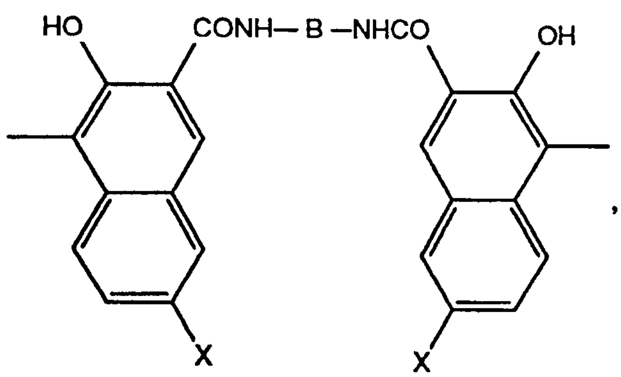

,

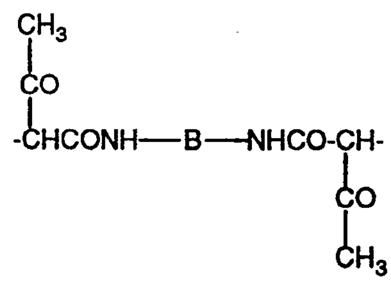

(II)

(III)

darstellt, wobei B einen Rest der Formeln

EP 0 442 846 A2

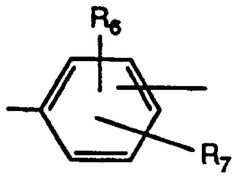 , 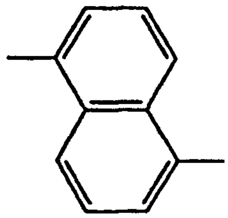 oder 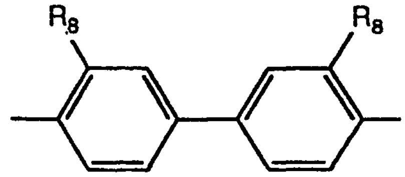 bedeutet,

wobei n die Zahl 1 oder 2 ist,
$R_1$ und $R_3$ unabhängig voneinander -H oder -Cl,
$R_2$ und $R_4$ unabhängig voneinander -H, Halogen, $-NO_2$, -CN, $C_1$-$C_4$-Alkyl, $C_1$-$C_4$-Alkoxy, $-CF_3$, $C_2$-$C_5$-Alkoxycarbonyl, oder unsubstituiertes oder am Phenylkern durch ein oder zwei Chloratome oder eine oder zwei Methyl-, Methoxy- oder Ethoxygruppen substituiertes -CONH-Phenyl, -NHCO-Phenyl oder Phenyloxy,
$R_5$ Alkyl mit mindestens 10 C-Atomen,
$R_6$ und $R_7$ unabhängig voneinander -H, Halogen, $-NO_2$, -CN, $-CF_3$, $C_1$-$C_4$-Alkyl oder $C_1$-$C_4$-Alkoxy,
$R_8$ -H, -Cl, -Br, $-CH_3$ oder $-OCH_3$, und
X -H, -Br, $-OCH_3$, -CN oder $-NO_2$ bedeuten,
eignen sich als Pigmente insbesondere zum Färben von Polyolefinen.

# DISAZOVERBINDUNGEN MIT LANGKETTIGEN ALKYLESTER- ODER ALKYLAMIDRESTEN

Die vorliegende Erfindung betrifft neue Disazoverbindungen enthaltend langkettige Alkylester- oder Alkylamidreste und ihre Verwendung zum Einfärben von hochmolekularem organischem Material, insbesondere von Polyolefinen.

Azopigmente mit Esterresten sind schon lange bekannt. Rote Disazopigmente sind z.B. in den US-Patenten Nr. 3137688 und Nr. 4689403 beschrieben, während gelbe Disazoverbindungen z.B. in den US-Patenten Nr. 4003886 und Nr. 4065488 offenbart werden. Ein Hauptmerkmal der dort aufgeführten Verbindungen besteht darin, dass sie mindestens vier Alkylesterreste aufweisen, wobei der Alkylrest bis max. 4 C-Atome enthält. Disazopigmente mit Alkylamidgruppen sind z.B. im US-Patent Nr. 3562249 beschrieben. Derartige Pigmente besitzen zwar im allgemeinen gute Pigmenteigenschaften, sie genügen jedoch z.B. wegen knapper Hitzebeständigkeit und/oder ungenügender Dispergierbarkeit nicht immer den heutigen Anforderungen der Technik.

Weiterhin sind in der EP-Patentanmeldung Nr. 358604 weitere Disazopigmente beschrieben, welche mindestens zwei langkettige Alkylester- oder Alkylamidreste enthalten und die sich zum Färben von hochmolekularen organischen Materialien, insbesondere von Polyolefinen, besonders eignen und eine verbesserte Dispergierbarkeit, eine geringere Ausblühtendenz und gute Pigmenteigenschaften aufweisen.

Es ist nun gefunden worden, dass sich Disazopigmente mit mindestens zwei langkettigen Alkylester- oder Alkylamidresten im zwei Benzolkerne aufweisenden Diazorest überraschenderweise sehr gut zum Färben von hochmolekularen organischen Materialien, insbesondere von Polyolefinen, eignen, wobei sie eine verbesserte Migrations- und Wetter-bestädigkeit sowie Ausblühechtheit bei guten allgemeinen Pigmenteigenschaften, insbesondere Hitzebeständigkeit und Dispergierbarkeit, aufweisen.

Die vorliegende Erfindung betrifft demnach Verbindungen der Formel I

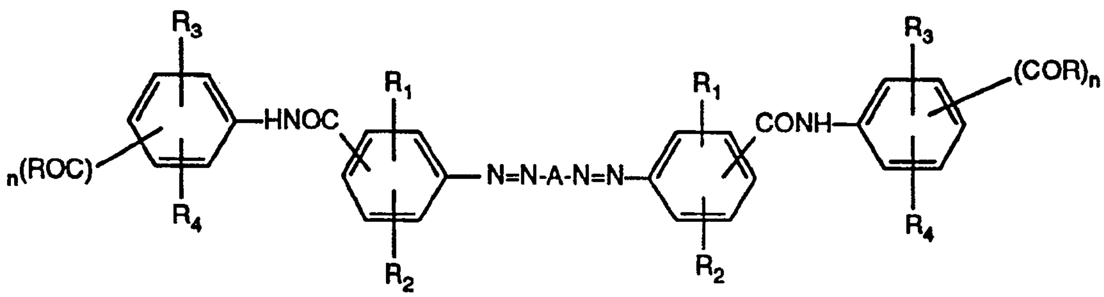

,

worin R für einen Rest der Formeln $-OR_5$ oder $-NHR_5$ steht, A einen Rest der Formeln II oder III

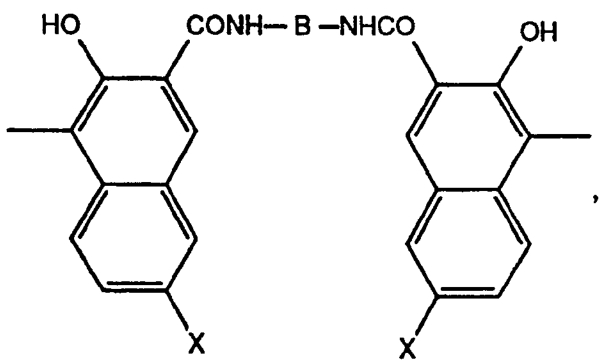

,

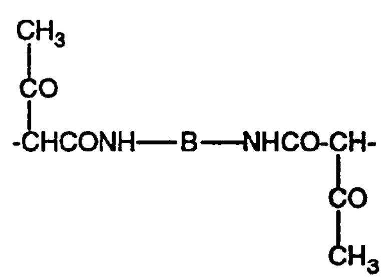

(II) (III)

darstellt, wobei B einen Rest der Formeln

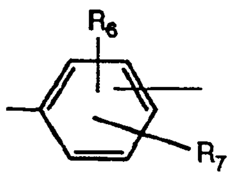 , 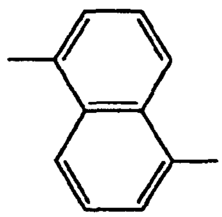 oder 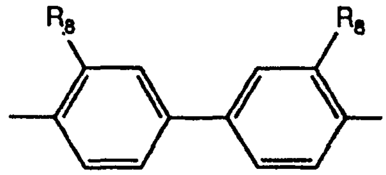 bedeutet,

wobein die Zahl 1 oder 2 ist,

$R_1$ und $R_3$ unabhängig voneinander -H oder -Cl,

$R_2$ und $R_4$ unabhängig voneinander -H, Halogen, $-NO_2$, -CN, $C_1$-$C_4$-Alkyl, $C_1$-$C_4$-Alkoxy, $-CF_3$, $C_2$-$C_5$-Alkoxycarbonyl, oder unsubstituiertes oder am Phenylkern durch ein oder zwei Chloratome oder eine oder zwei Methyl-, Methoxy- oder Ethoxygruppen substituiertes -CONH-Phenyl, -NHCO-Phenyl oder Phenyloxy,

$R_5$ Alkyl mit mindestens 10 C-Atomen,

$R_6$ und $R_7$ unabhängig voneinander -H, Halogen, $-NO_2$, -CN, $-CF_3$, $C_1$-$C_4$-Alkyl oder $C_1$-$C_4$-Alkoxy,

$R_8$ -H, -Cl, -Br, $-CH_3$ oder $-OCH_3$, und

X -H, -Br, $-OCH_3$, -CN oder $-NO_2$ bedeuten.

Halogen in den oben aufgeführten Gruppen bedeutet Fluor, Brom und insbesondere Chlor.

$C_1$-$C_4$-Alkyl als $R_2$, $R_4$, $R_6$ und $R_7$ bedeutet Methyl, Ethyl, n-Propyl, Isopropyl, n-Butyl, Isobutyl und tert-Butyl.

$C_1$-$C_4$-Alkoxy als $R_2$, $R_4$, $R_6$ und $R_7$ bedeutet z.B. Methoxy, Ethoxy, n-Propoxy, Iso-propoxy, n-Butoxy und tert.-Butoxy.

$C_2$-$C_5$-Alkoxycarbonyl als $R_2$ und $R_4$ ist z.B. Methoxycarbonyl, Ethoxycarbonyl, n-Propoxycarbonyl, Isopropoxycarbonyl, n-Butoxycarbonyl und tert-Butoxycarbonyl.

X stellt vor allem ein Wasserstoffatom dar.

Die Reste B in den Formeln II und III leiten sich z.B. von m-Phenylen- und insbesondere von p-Phenylendiaminen der folgenden Formeln

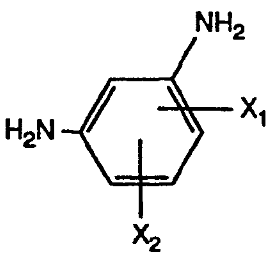 und 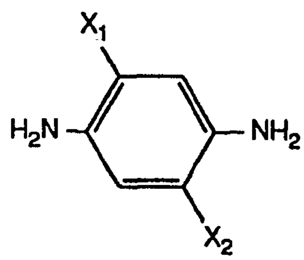 ab, worin

$X_1$ und $X_2$ unabhängig voneinander -H, Halogen, $-NO_2$, -CN, $-CF_3$, $C_1$-$C_4$-Alkyl oder $C_1$-$C_4$-Alkoxy bedeuten.

$C_1$-$C_4$-Alkyl, $C_1$-$C_4$-Alkoxy und Halogen als $X_1$ und $X_2$ können die gleiche bereits oben agegebene Ausdeutung haben.

Beispiele für derartige Diamine sind: 1,4-Diaminobenzol, 1,4-Diamino-2-chlorbenzol, 1,4-Diamino-2-brombenzol, 1,4-Diamino-2,5-dichlorbenzol, 1,4-Diamino-2-methylbenzol, 1,4-Diamino-2,5-dimethylbenzol, 1,4-Diamino-2-methoxybenzol, 1,4-Diamino-2,5-dimethoxybenzol, 1,4-Diamino-2,5-diethoxybenzol, 2-Chlor-5-methyl- 1,4-phenylendiamin, 2-Chlor-5-methoxy- 1,4-phenylendiamin, 2-Methyl-5-methoxy- 1,4-phenylendiamin, 1,3-Diaminobenzol, 1,3-Diamino-2-methylbenzol, 1,3-Diamino-4-chlorbenzol und 1,3-Diamino-4-methylbenzol.

Beispiele von Diaminen, die sich vom Rest der Formel

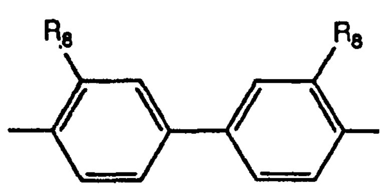

ableiten, sind :

3,3'-Dichlorbenzidin, 3,3'-Dibrombenzidin, 3,3'-Dimethylbenzidin und 3,3'-Dimethoxybenzidin.

Alkyl mit mindestens 10 C-Atomen (im Rest $-OR_5$ bzw. $-NHR_5$) ist verzweigtes oder geradkettiges Alkyl, z.B. n-Decyl, n-Dodecyl, n-Tridecyl, Isotridecyl, n-Tetradecyl (Myristyl), n-Pentadecyl, n-Hexadecyl, 1-Methylpentadecyl, n-Octadecyl, n-Eicosyl, n-Tetracosyl, n-Hexacosyl, n-Triacontyl und n-Pentacontyl.

Alkyl als $R_5$ steht bevorzugt für $C_{12}$- bis $C_{35}$-Alkyl, insbesondere für $C_{12}$- bis $C_{18}$-Alkyl, oder Gemische davon ; derartige Alkylreste leiten sich z.B. von langkettigen Alkanolen sowie von den als Alfole bekannten und käuflichen Gemischen von unverzweigten primären Alkoholen ab, die im wesentlichen Alkylgruppen mit einer stets geraden Zahl von C-Atomen besitzen und als Ausgangsprodukte verwendet werden. Die Alkylgruppen werden bei den Alkoholen als "Alfyl" bezeichnet, z.B. Alfyl-$C_{12}$, Alfyl-$C_{14}$.

Bevorzugt sind Verbindungen der Formel I, wobei die Formel I folgende Struktur

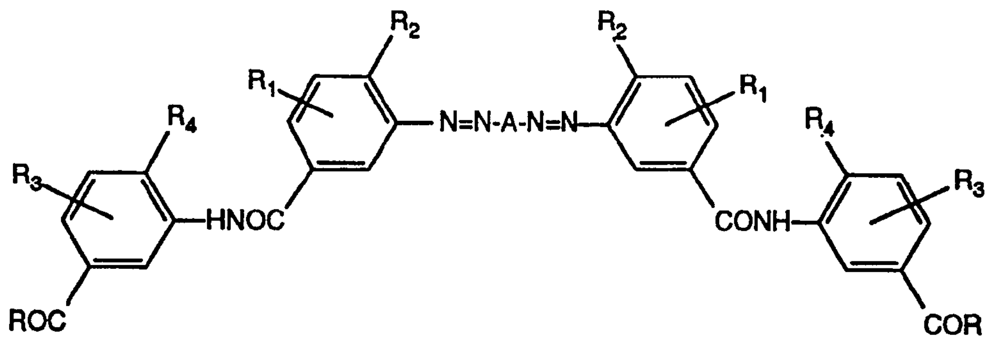

aufweist, und die Gruppen R, $R_1$, $R_2$, $R_3$, $R_4$ und A die oben angegebene Bedeutung haben.

Besonders bevorzugt sind Verbindungen der Formel I, wobei die Formeln II und III die folgenden Strukturen

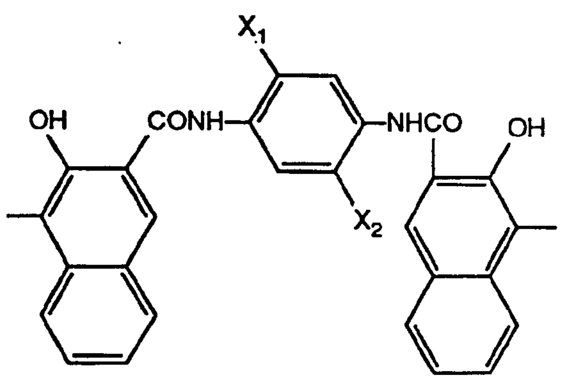

und

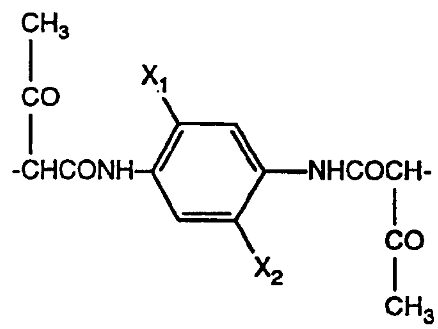

aufweisen und $X_1$ und $X_2$ die oben angegebene Bedeutung haben.

Besonders bevorzugt sind Verbindungen der Formel IV

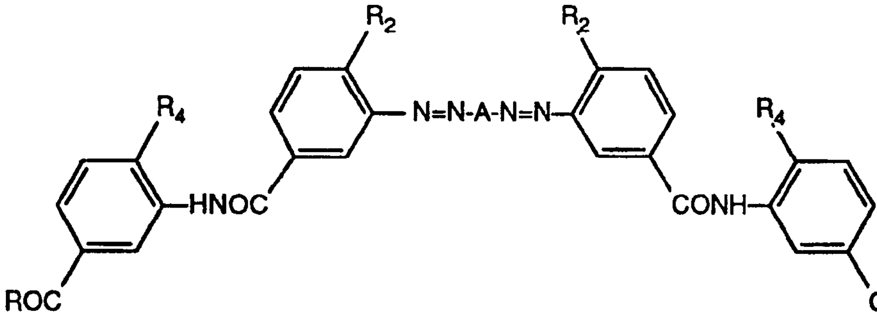

(IV),

worin A für einen Rest der Formeln V oder VI

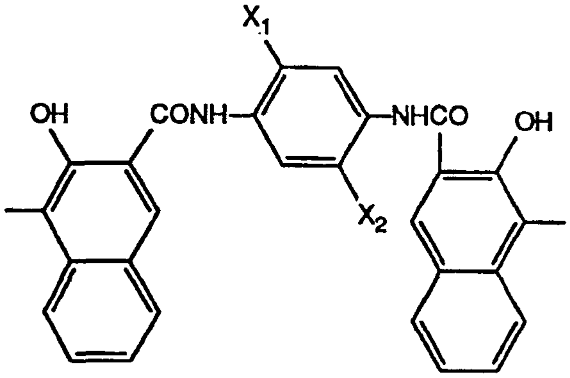

(V)

,

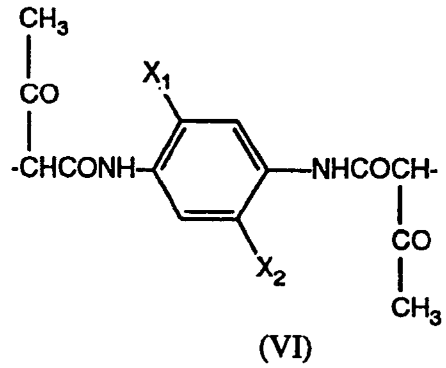

(VI)

steht, wobei R für einen Rest der Formeln $-OR_5$ oder $-NHR_5$ steht, $R_2$ und $R_4$ unabhängig voneinander -H, -Cl, $-CH_3$, $-OCH_3$, $-OC_2H_5$, $-COOCH_3$, $-COOC_2H_5$ oder $-OC_6H_5$, $R_5$ $C_{12}$-$C_{35}$-Alkyl, und $X_1$ und $X_2$ unabhängig voneinander -H, -Cl, $-CH_3$, $-OCH_3$ oder $-OC_2H_5$ bedeuten.

R in der Formel IV steht ganz bevorzugt für einen Rest der Formel $-OR_5$.

In der Formel IV steht A bevorzugt für einen Rest der Formel V, insbesondere aber für einen Rest der Formel V, wobei für diese Bevorzugung $R_2$ -Cl, $-CH_3$ oder $-OCH_3$, insbesondere aber -Cl, bedeutet, $R_4$ -Cl, $-CH_3$, $-OCH_3$, $-COOCH_3$ oder $-COOC_2H_5$, insbesondere aber -Cl, bedeutet, $R_5$ $C_{12}$-$C_{18}$-Alkyl, und $X_1$ und $X_2$ unabhängig voneinander -H, -Cl, $-CH_3$ oder $-OCH_3$ bedeuten.

Ebenfalls besonders bevorzugt sind Verbindungen der folgenden Formel

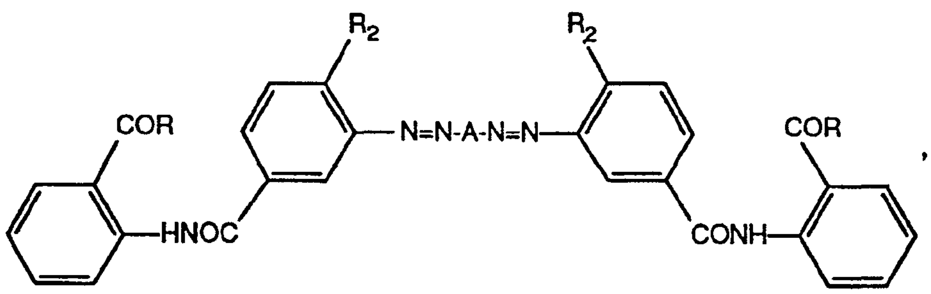

,

worin A für einen Rest der obigen Formeln V oder VI stehen, wobei $X_1$ und $X_2$ unabhängig voneinander -H, -Cl, $-CH_3$, $-OCH_3$ oder $-OC_2H_5$ bedeuten, $R_2$ -Cl oder $-CH_3$ ist, und R für einen Rest der Formeln $-OR_5$ oder $-NHR_5$ steht, wobei $R_5$ $C_{12}$-$C_{18}$-Alkyl bedeutet.

Die Verbindungen der Formel I stellen bevorzugt symmetrische Verbindungen dar, worin die beiden zwei Benzolkerne enthaltenden Diazokomponenten gleich sind. Asymmetrische Verbindungen, worin die beiden Diazokomponenten verschieden sind, fallen auch unter die Definition der obigen Formel I.

Die Verbindungen der Formel I können nach an und für sich bekannten Verfahren hergestellt werden, z.B.:

a) durch Kondensation von 2 Mol eines Carbonsäurehalogenides, insbesondere eines Chlorides der Formel

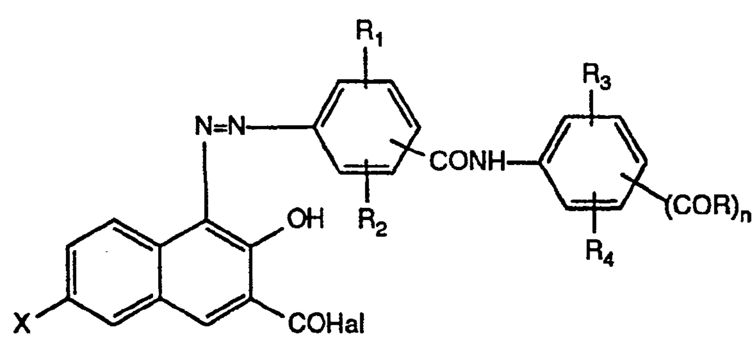

mit einem Diamin der Formel $H_2N$-B-$NH_2$, insbesondere der Formel

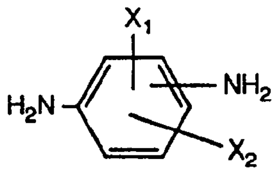

gemäss z.B. US-Patent Nr. 4689403, und
durch Kondensation gemäss US-Patent Nr. 4065448 von 1 Mol eines Disazodicarbonsäuredihalogenides der Formel

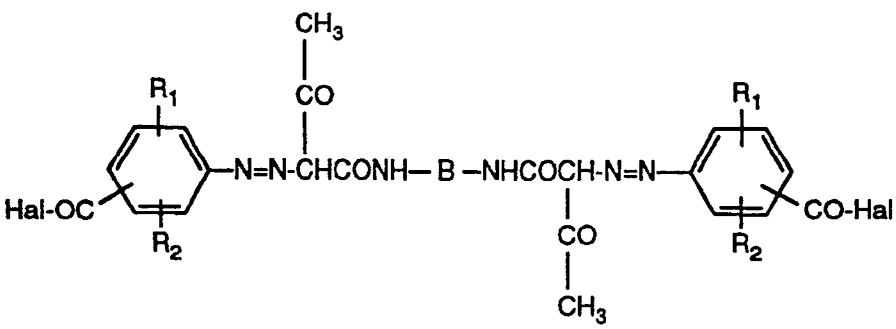

mit 2 Mol eines Amins der Formel

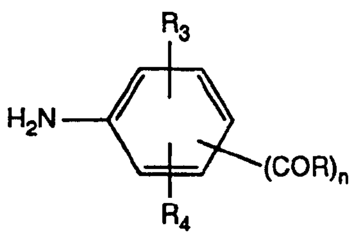

, oder

b) durch Diazotierung eines Amins der Formel

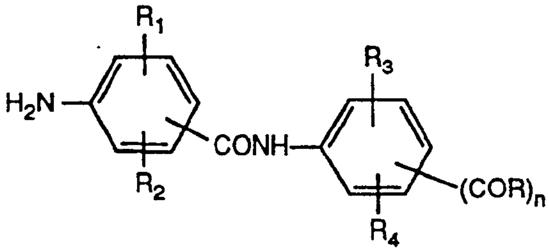

und anschliessende Kupplung der erhaltenen Diazokomponente mit einer Kupplungskomponente der Formeln

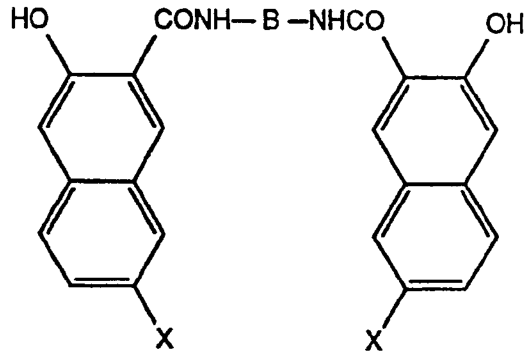

oder

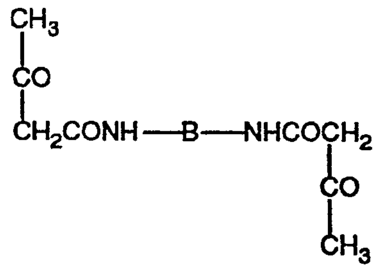

z.B. gemäss US-Patent Nr. 4003886,
wobei in den oben agegebenen Formeln die Gruppen n, B, R, $R_1$ bis $R_5$, Hal, $X_1$ und $X_2$ die oben angegebene Definition haben.

Die obigen Kupplungskomponenten sind bekannte Zwischenprodukte. Die obigen Carbonsäurehalogenide auf β-Hydroxynaphthoesäurebasis, sowie deren entsprechende Säuren, stellen dagegen neue Zwischenprodukte dar. Sie können nach bekannten Verfahren, z.B. gemäss US Patent Nr. 4689403, erhalten werden.

Einen weiteren Erfindungsgegenstand stellen daher Verbindungen der folgenden Formel VII dar :

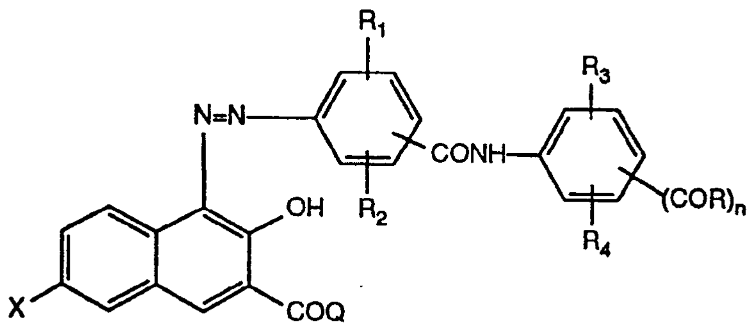

(VII),

worin n die Zahl 1 oder 2 ist, R für einen Rest der Formeln $-OR_5$ oder $-NHR_5$ steht, $R_1$ und $R_3$ unabhängig voneinander -H oder -Cl, $R_2$ und $R_4$ unabhängig voneinander -H, Halogen, $-NO_2$, -CN, $C_1$-$C_4$-Alkyl, $C_1$-$C_4$-Alkoxy, $-CF_3$, $C_2$-$C_5$-Alkoxycarbonyl oder unsubstituiertes oder am Phenylkern durch ein oder zwei Chloratome oder eine oder zwei Methyl-, Methoxy- oder Ethoxygruppen substituiertes -CONH-Phenyl, -NHCO-Phenyl oder Phenyloxy, $R_5$ Alkyl mit mindestens 10 C-Atomen, X -H, -Br, $-OCH_3$, -CN oder $-NO_2$, und Q -OH oder Halogen, insbesondere -Cl, bedeuten.

Für die Ausdeutung von $C_1$-$C_4$-Alkyl, $C_1$-$C_4$-Alkoxy, $C_2$-$C_5$-Alkoxycarbonyl und $R_5$ sei auf die entsprechenden bereits oben aufgeführten Definitionen verwiesen.

Bevorzugte Verbindungen der Formel VII haben die Formel VIII

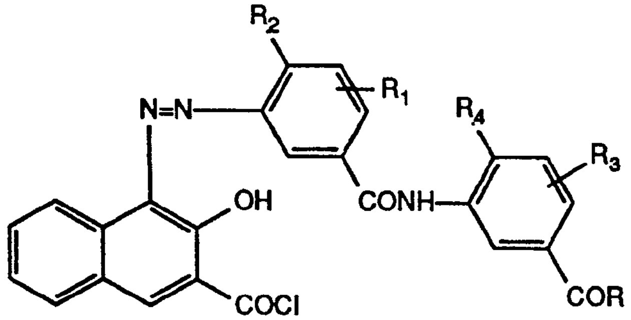

(VIII), wobei

R, $R_1$, $R_2$, $R_3$ und $R_4$ die oben angegebene Bedeutung haben.

Besonders bevorzugte Verbindungen weisen die Formel VIII auf, worin $R_1$ und $R_3$ -H, $R_2$ -Cl, $-CH_3$ oder $-OCH_3$, besonders aber -Cl, bedeuten, $R_4$ -Cl, $-CH_3$, $-OCH_3$, $-COOCH_3$, $-COOC_2H_5$, insbesondere aber -Cl,

bedeutet, und R für einen Rest der Formel $-OR_5$ steht, wobei $R_5$ $C_{12}$-$C_{18}$-Alkyl bedeutet.

Ein bevorzugtes Herstellungsverfahren ist das Kondensationsverfahren gemäss obigem Schema a). Die Kondensation wird zweckmässig in Gegenwart eines organischen inerten Lösungsmittels bei Normal- oder Ueberdruck, mit oder ohne Katalysator, durchgeführt. Geeignete Lösungsmittel sind z.B. Toluol, Chlorbenzol, Dichlorbenzole, wie o-Dichlorbenzol, ferner Trichlorbenzole, Nitrobenzol oder Gemische aromatischer und/oder aliphatischer Lösungsmittel, wie ®Shellsole.

Die Verbindungen der Formel I können aber auch über eine Umesterungs- bzw. Amidierungsreaktion hergestellt werden, indem man eine Verbindung der Formel

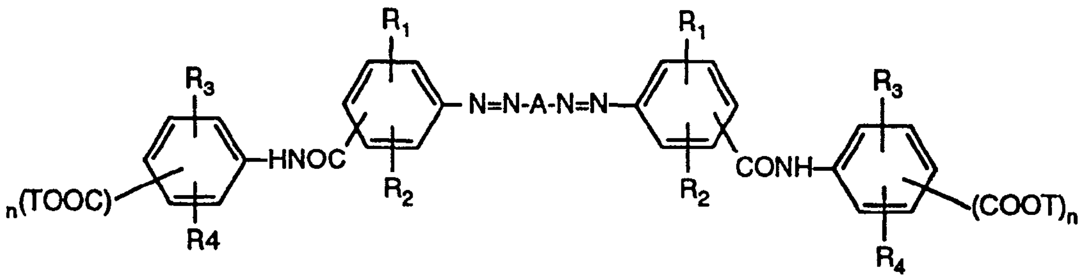

,

worin T $C_1$-$C_3$-Alkyl bedeutet, und die übrigen Symbole n, A, $R_1$, $R_2$, $R_3$ und $R_4$ die oben angegebene Bedeutung haben,
mit einem Alkohol oder einem Amin der Formel $R_5$-OH oder $R_5NH_2$ nach bekannten Verfahren zu Verbindungen der Formel I umestert bzw. umamidiert. T bedeutet Methyl, Ethyl, Propyl oder Isopropyl, insbesondere aber Methyl.

Die Umsetzung erfolgt zweckmässig direkt in einem Ueberschuss (als Lösungsmittel) des entsprechenden langkettigen Alkohols oder Amins oder bevorzugt in Gegenwart eines inerten organischen Lösungsmittels, wie z.B. Toluol, Xylole, Dichlorbenzole, Nitrobenzol, Chlornaphthalin, Anisol, ®Dowtherm, oder Ketone, wie Cyclohexanon, bei erhöhter Temperatur, z.B. im Siedebereich des verwendeten Lösungmittels, unter Normaldruck oder unter Druck, mit oder ohne Katalysatoren. Werden Katalysatoren eingesetzt, so sind z.B. Schwefelsäure, p-Toluolsulfonsäure, Methylsulfonsäure, LiH, $LiNH_2$, $NaOCH_3$, KO-tert-Butylat, Tetraalkyltitanate, Dibutylzinnoxid oder seltene Erden geeignet.

Die Isolierung der erhaltenen Verbindungen der Formel I erfolgt wie üblich z.B. durch Filtration, und das erhaltene Nutschgut wird mit einem der bereits oben angegebenen Lösungsmittel und dann zweckmässig noch mit Wasser gewaschen. Diese Verbindungen werden im allgemeinen in guter Ausbeute und Reinheit erhalten und können ohne weitere Reinigung in feinverteilter Form z.B. zum Färben von hochmolekularem organischem Material verwendet werden.

Sofern ihre Reinheit und/oder Partikel-Form und -Grösse zur Anwendung als Pigmente noch nicht genügend bzw. optimal sind, können die anmeldungsgemässen Verbindungen weiter konditioniert werden. Unter Konditionierung versteht man die Herstellung einer feinen, für die Applikation optimalen Partikel-Form und -Grösse, beispielsweise durch Trockenmahlung mit oder ohne Salz, durch Lösungsmittel- oder wässrige Mahlung oder durch Salzknetung oder durch eine nachträgliche thermische Lösungsmittelbehandlung.

Thermische Lösungsmittelbehandlungen können z.B. in organischen Lösungsmitteln, vorzugsweise mit solchen, die über 100°C sieden, durchgeführt werden.

Als besonders geeignet hierfür erweisen sich durch Halogenatome, Alkyl- oder Nitrogruppen substituierte Benzole, wie Toluol, Chlorbenzol, o-Dichlorbenzol, Xylole oder Nitrobenzol, Alkohole, wie Isopropanol oder Isobutanol, ferner Ketone, wie Cyclohexanon, Ether, wie Ethylenglykolmonomethyl- oder -monoethylether, Amide, wie Dimethylformamid oder N-Methyl-pyrrolidon, sowie Dimethylsulfoxyd, Sulfolan oder Wasser allein, gegebenenfalls unter Druck. Man kann die Nachbehandlung auch in Wasser in Gegenwart von organischen Lösungsmitteln und/oder mit Zusatz von oberflächen-aktiven Substanzen oder aliphatischen Aminen, oder in flüssigem Ammoniak, durchführen.

Je nach Konditionierverfahren und/oder Applikationszweck kann es von Vorteil sein, der anmeldungsgemässen Verbindung der Formel I gewisse Mengen an texturverbessernden Mitteln vor oder nach dem Konditionierprozess zuzufügen. Als solche kommen insbesondere Fettsäuren mit mindestens 18 C-Atomen, beispielsweise Stearin- oder Behensäure oder deren Amide oder Metallsalze, insbesondere Mg-Salze, sowie Weichmacher, Wachse, Harzsäuren, wie Abietinsäure, Kolophoniumseife, Alkylphenole oder aliphatische Alkohole, wie Stearylalkohol, oder vicinale Diole, wie Dodecandiol-1,2, ferner modifizierte Kolophoniummaleinatharze oder Fumarsäurekolophoniumharze, in Betracht. Die texturverbessernden Mittel werden vorzugsweise in Mengen von 0,1-30 Gew.%, insbesondere 2-15 Gew. %, bezogen auf das Endprodukt, zugesetzt.

Hochmolekulares organisches Material kann natürlicher oder künstlicher Herkunft sein. Es kann sich z.B. um Naturharze oder trocknende Oele, Kautschuk oder Casein oder um abgewandelte Naturstoffe, wie Chlorkautschuk, ölmodifizierte Alkydharze, Viscose, um Celluloseether oder -ester, wie Celluloseacetat, Cellulosepropionat, Celluloseacetobutyrat oder Nitrocellulose, handeln, insbesondere aber um vollsynthetische organische Polymere (Duroplaste und Thermoplaste), wie sie durch Polymerisation, Polykondensation oder Polyaddition erhalten werden. Aus der Klasse der Polymerisationsharze seien in erster Linie genannt : Polyolefine, wie Polyethylen, Polypropylen oder Polyisobutylen, ferner substituierte Polyolefine, wie Polymerisate aus Vinylchlorid, Vinylacetat, Styrol, Acrylnitril, Acrylsäure- und/oder Methacrylsäureestern oder Butadien, sowie Kopolymerisate der erwähnten Monomeren, insbesondere ABS, EVA oder Acryl-styrol-acrylonitril (ASA).

Aus der Reihe der Polyadditionsharze und Polykondensationsharze seien die Kondensationsprodukte von Formaldehyd mit Phenolen, die sogenannten Phenoplaste, und die Kondensationsprodukte von Formaldehyd mit Harnstoff, Thioharnstoff und Melamin, die sogenannten Aminoplaste, die als Lackharze verwendeten Polyester, und zwar sowohl gesättigte, wie z.B. Alkydharze, als auch ungesättigte, wie beispielsweise Maleinatharze, ferner die linearen Polyester, Polycarbonate, Polyurethane und Polyamide oder Silikone genannt. Besonders gute Ausfärbungen werden mit Alkyd/Melamin-Harzen erhalten.

Die erwähnten hochmolekularen Verbindungen können einzeln oder in Gemischen, als plastische Massen oder Schmelzen, die gegebenenfalls zu Fasern versponnen werden können, vorliegen.

Sie können auch im polymerisierten Zustand in gelöster Form als Filmbildner oder Bindemittel für Lacke oder Druckfarben vorliegen, wie z.B. Leinölfirnis, Nitrocellulose, Alkydharze, Melaminharze und Harnstoff-Formaldehydharze oder Acrylharze.

Die Pigmentierung der hochmolekularen, organischen Substazen mit den definitionsgemässen Verbindungen der Formel I erfolgt beispielsweise derart, dass man eine solche Verbindung gegebenenfalls in Form von Masterbatches, diesen Substraten unter Verwendung von Walzwerken, Misch- oder Mahlapparaten zumischt. Das pigmentierte Material wird hierauf nach an sich bekannten Verfahren wie Kalandrieren, Pressen, Strangpressen, Streichen, Verspinnen, Giessen oder durch Spritzguss in die gewünschte endgültige Form gebracht. Oft ist es erwünscht, zur Herstellung von nicht starren Formlingen oder zur Verringerung ihrer Sprödigkeit den hochmolekularen Verbindungen vor der Verformung sogenannte Weichmacher einzuverleiben. Als solche können z.B. Ester der Phosphorsäure, Phthalsäure oder Sebacinsäure dienen. Die Weichmacher können vor oder nach der Einverleibung des Pigmentes in die Polymeren eingearbeitet werden. Es ist ferner möglich, zwecks Erzielung verschiedener Farbtöne den hochmolekularen organischen Stoffen neben den erfindungsgemässen Verbindungen noch Füllstoffe bzw. andere farbgebende Bestandteile, wie Weiss-, Bunt- oder Schwarzpigmente, in beliebigen Mengen zuzufügen.

Zum Pigmentieren von Lacken und Druckfarben werden die hochmolekularen organischen Materialien und die Verbindungen der Formel I gegebenenfalls zusammen mit Zusatzstoffen, wie Füllmitteln, anderen Pigmenten, Siccativen oder Weichmachern, in einem gemeinsamen organischen Lösungsmittel oder Lösungsmittelgemisch fein dispergiert bzw. gelöst. Man kann dabei so verfahren, dass man die einzelnen Komponenten für sich oder auch mehrere gemeinsam dispergiert bzw. löst, und erst hierauf alle Komponenten zusammenbringt.

Die hochmolekularen organischen Substazen enthalten vorzugsweise 0,01-20 Gew.% einer definitionsgemässen Verbindung der Formel I, beispielsweise in Kunststoffen, Fasern, Lacken und Druckfarben.

Die Verbindungen der Formel I werden aber bevorzugt zum Einfärben von Polyolefinen eingesetzt.

Als Beispiele für Polyolefine seien Polyethylen hoher und niederer Dichte (HD-PE, LD-PE und LLD-PE), Polypropylen und Polyisobutylen, sowie Copolymere von Polyolefinen mit z.B. Polyethern, Polyetherketonen oder Polyurethanen erwähnt.

Die Einfärbung erfolgt nach üblichen Verfahren, beispielsweise durch Mischen einer Verbindung der Formel I mit dem Polyolefingranulat oder -pulver und Extrudieren der Mischung zu Fasern, Folien oder Granulaten. Letztere können dann im Spritzgussverfahren zu Gegenständen verformt werden.

Die erhaltenen Ausfärbungen weisen im allgemeinen einen gelben bis roten Farbton auf. Als besonders gut haben sich die gelben Produkte erwiesen.

Die erhaltenen Ausfärbungen weisen hohe Reinheit und hohe Sättigung auf und zeichnen sich durch eine ausgezeichnete Dispergierbarkeit, durch gute allgemeine Beständigkeit, wie z.B. Ueberlackier-, Migrations-, Wetter- und insbesondere Hitze- und Lichtbeständigkeit, sowie durch eine ausgezeichnete Ausblühechtheit aus. Ein besonderer Vorteil von mit den erfindungsgemässen Verbindungen der Formel I gefärbten Polyethylengegenständen besteht darin, dass sie insbesondere im Falle von HD-PE keine erhöhte Neigung zu Verzugs- und Deformationserscheinungen zeigen. Sie zeigen zudem eine hohe Säurebeständigkeit und sind auch farbstark.

Die mit den erfindungsgemässen Verbindungen der Formel I in der Masse eingefärbten Kunststoff-Fasern, wie z.B. PP-Fasern, besitzen ausgezeichnete textile Eigenschaften, wie z.B. Licht- und Nassbeständigkeiten gegenüber Wasch- und Lösungsmitteln.

Die nachfolgenden Beispiele dienen zur Erläuterung der Erfindung.

Beispiel 1 : 3,55 g des Disazodicarbonsäuredichorides der Formel

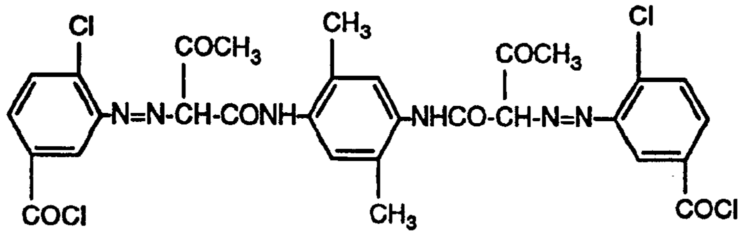

und 4,05 g 4-Methyl-3-amino-benzoesäurestearylester werden in einem Gemisch von 160 ml getrocknetem o-Dichlorbenzol und 2 ml Pyridin auf 133°C erhitzt und während 18 Stunden bei dieser Temperatur gerührt. Die enstandene ockergelbe schlierige Masse wird auf 80°C abgekühlt und mit 160 ml Ethanol (98%-ig) versetzt. Die Temperatur fällt auf 50°C, wobei aus der Reaktionsmasse eine ockergelbe Suspension entsteht. Man nutscht das Produkt ab, wäscht das Nutschgut mit 100 ml Ethanol, und schlämmt es in einer Mischung von 100 ml Ethanol und 100 ml 5%-iger wässriger Ammoniaklösung kurz auf (mit einem Mixer). Man nutscht das Produkt wieder ab und trocknet es im Vakuum bei 60°C. Die Ausbeute beträgt 6,5 g (90,4 % d. Th.). Das orange Pulver entspricht der Formel

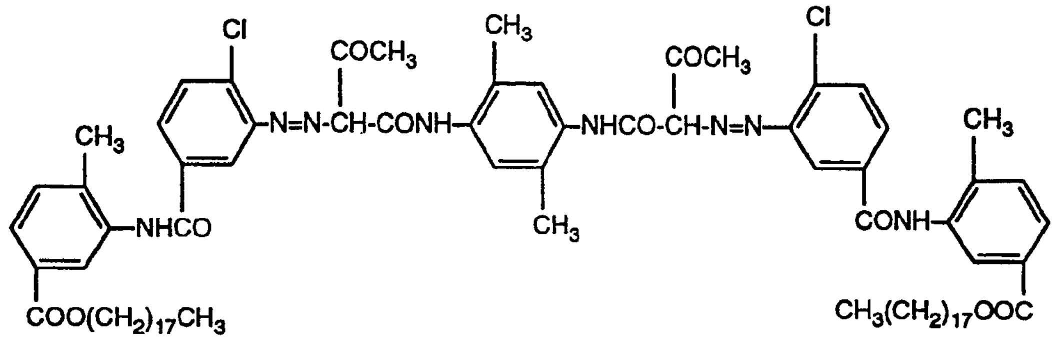

und weist folgende Verbrennungsanalyse auf :

| | | | | |
|---|---|---|---|---|
| Ber. (in %): | C 68,35 | H 7,84 | Cl 4,92 | N 7,78; |
| Gef. (in %): | C 68,18 | H 7,72 | Cl 4,96 | N 7,90. |

Dieses Produkt färbt Polyvinylchlorid, Polyethylen und Polyamid in farbstarken gelben Tönen von ausgezeichneter Hitze-, Migrations- und Lichtbeständigkeit. Eine mit diesem Produkt erhaltene AM-Lackausfärbung ist wetterecht.

Herstellung des benötigten Ausgangsmaterials (4-Methyl-3-amino-benzoesäurestearylester)

a) 4-Methyl-3-nitrobenzoesäurestearylester : 133 g Stearylalkohol (97%-ig) wird in einer Mischung von 700 ml Chlorbenzol und 62 ml Pyridin bei 35°C gelöst. Die klare farblose Lösung wird innerhalb 2 Minuten mit 101 g 4-Methyl-3-nitro-benzoylchlorid versetzt. Die Temperatur steigt dabei auf 66°C an. Die entstadene braune Suspension wird auf 90°C erhitzt, 4 Stunden bei dieser Temperatur gerührt, auf Raumtemperatur abkühlen gelassen und durch eine Hyflo-Schicht abfiltriert. Das klare dunkelorange Filtrat wird auf 5°C abgekühlt und mit 500 ml Petrolether versetzt. Der ausgefallene Niederschlag wird durch einen Stoff-Filter filtriert, abgepresst und in 800 ml 50%-igem Ethanol aufgeschlämmt (Mixer). Die erhaltene Suspension wird abgenutscht, und das Nutschgut wird dann im Vakuum bei 50°C getrocknet. Man erhält 194,5 g (89,7 % d. Th.) eines hellgelben Pulvers vom Schmelzpunkt 66°C mit folgender Verbrennungsanalyse :

| | | | |
|---|---|---|---|
| Ber. (in %): | C 72,01 | H 9,98 | N 3,23; |
| Gef. (in %): | C 72,06 | H 9,91 | N 3,27. |

b) 4-Methyl-3-amino-benzoesäurestearylester : 42 g 4-Methyl-3-nitro-benzoesäurestearylester werden in 400 ml Dioxan in Gegenwart von 8,5 g Raney-Nickel mit 6,52 Litern Wasserstoff (Theorie : 6,73 l, 96,9 %) hydriert. Die erhaltene Lösung wird vom Raney-Nickel klar filtriert. Das dunkelbraune Filtrat giesst man auf 1500 ml Wasser. Der ausgefallene beige Niederschlag wird durch einen Stoff-Filter filtriert, mit 250 ml Wasser gewaschen, abgepresst und im Vakuum bei 50°C getrocknet. Die Ausbeute des leicht beigen Pulvers vom Schmelzpunkt 79°C beträgt 38,2 g (94,65 % d. Th.).
Verbrennungsanalyse :

| | | | |
|---|---|---|---|
| Ber. (in %): | C 77,37 | H 11,24 | N 3,47; |
| Gef. (in %): | C 77,34 | H 11,11 | N 3,39. |

Beispiele 2-21 : In der nachstehenden Tabelle sind weitere Verbindungen beschrieben, die nach dem Verfahren des obigen Beispiels 1 hergestellt werden können, indem man die Diazoverbindung eines in der Kolonne I aufgeführten Amines auf das Bisacetessigsäurearylid des in der Kolonne II aufgeführten Diamins kuppelt, die so erhaltene Disazofarbstoffdicarbonsäure in ihr entsprechendes Dicarbonsäuredichlorid überführt, und dann dieses mit einem Amin der Kolonne III kondensiert. Kolonne IV gibt den Farbton der mit diesen Pigmenten gefärbten PVC-Folie an.

| Bsp. | I | II | III | IV |
|---|---|---|---|---|
| 2 | 4-Methyl-3-amino-benzoesäure | 2,5-Dimethyl-p-phenylendiamin | 4-Methyl-3-amino-benzoesäurestearylester | gelb |
| 3 | 4-Chlor-3-amino-benzoesäure | 2-Chlor-5-methyl-p-phenylendiamin | 4-Methyl-3-amino-benzoesäurestearylester | grüngelb |
| 4 | 4-Chlor-3-amino-benzoesäure | 2,5-Dimethyl-p-phenylendiamin | 4-Methyl-3-amino-benzoesäurestearylamid | gelb |
| 5 | 4-Chlor-3-amino-benzoesäure | 2,5-Dimethyl-p-phenylendiamin | 4-Methyl-3-amino-benzoesäure-n-tetradecanylester | grüngelb |
| 6 | 4-Chlor-3-amino-benzoesäure | 2,5-Dimethyl-p-phenylendiamin | 3-Amino-benzoesäure-stearylester | gelb |
| 7 | 4-Chlor-3-amino-benzoesäure | 2,5-Dimethyl-p-phenylendiamin | 4-Methyl-3-amino-benzoesäure-n-decanylester | gelb |
| 8 | 4-Chlor-3-amino-benzoesäure | 2,5-Dimethyl-p-phenylendiamin | 4-Methyl-3-amino-benzoesäurelaurylester | gelb |
| 9 | 4-Chlor-3-amino-benzoesäure | 2,5-Dimethyl-p-phenylendiamin | 4-Methoxy-3-amino-benzoesäurestearylester | gelb |
| 10 | 4-Chlor-3-amino-benzoesäure | 2,5-Dimethyl-p-phenylendiamin | 2-Amino-terephthalsäure-distearylester | gelb |
| 11 | 4-Chlor-3-amino-benzoesäure | 2,5-Dimethyl-p-phenylendiamin | 4-Chlor-3-amino-benzoesäurestearylester | grüngelb |
| 12 | 4-Chlor-3-amino-benzoesäure | 2,5-Dimethyl-p-phenylendiamin | 4-Amino-benzoesäure-stearylamid | orange-gelb |
| 13 | 4-Chlor-3-amino-benzoesäure | 2,5-Dimethyl-p-phenylendiamin | 4-Stearoylaminoanilin | orange-gelb |
| 14 | 4-Chlor-3-amino-benzoesäure | 2,5-Dichlor-p-phenylendiamin | Anthranilsäurestearylester | grüngelb |
| 15 | 4-Chlor-3-amino-benzoesäure | 2,5-Dichlor-p-phenylendiamin | Anthranilsäurestearylamid | grüngelb |
| 16 | 4-Chlor-3-amino-benzoesäure | 2,5-Dichlor-p-phenylendiamin | 4-Carbomethoxy-3-amino-benzoesäurestearylamid | grüngelb |
| 17 | 4-Chlor-3-amino-benzoesäure | 2,5-Dichlor-p-phenylendiamin | 4-Carbomethoxy-3-amino-benzoesäurelaurylester | gelb |

| Bsp. | I | II | III | IV |
|---|---|---|---|---|
| 18 | 4-Chlor-3-amino-benzoesäure | 2,5-Dimethyl-p-phenylendiamin | Anthranilsäurestearylamid | gelb |
| 19 | 4-Chlor-3-amino-benzoesäure | 2,5-Dimethyl-p-phenylendiamin | 4-Carbomethoxy-3-amino-benzoesäurestearylester | gelb |
| 20 | 4-Chlor-3-amino-benzoesäure | 2-Chlor-5-methyl-p-phenylendiamin | 4-Carbomethoxy-3-amino-benzoesäurestearylester | gelb |
| 21 | 4-Chlor-3-amino-benzoesäure | 2-Chlor-5-methyl-p-phenylendiamin | Anthranilsäurestearylamid | grüngelb |
| 22 | 4-Chlor-3-amino-benzoesäure | 2-Chlor-5-methyl-p-phenylendiamin | 4-Methyl-3-amino-benzoesäurestearylamid | grüngelb |
| 23 | 4-Chlor-3-amino-benzoesäure | 2-Chlor-5-methyl-p-phenylendiamin | 4-Methyl-2-amino-benzoesäure-n-tetradecanylester | grüngelb |
| 24 | 4-Chlor-3-amino-benzoesäure | 2-Chlor-5-methyl-p-phenylendiamin | 3-Amino-benzoesäurestearylester | grüngelb |
| 25 | 4-Chlor-3-amino-benzoesäure | 2-Chlor-5-methyl-p-phenylendiamin | 4-Methyl-3-amino-benzoesäure-n-decanylester | grüngelb |
| 26 | 4-Chlor-3-amino-benzoesäure | 2-Chlor-5-methyl-p-phenylendiamin | 4-Methyl-3-amino-benzoesäurelaurylester | grüngelb |
| 27 | 4-Chlor-3-amino-benzoesäure | 2-Chlor-5-methyl-p-phenylendiamine | 4-Methoxy-3-amino-benzoesäurestearylester | grüngelb |
| 28 | 4-Chlor-3-amino-benzoesäure | 2-Chlor-5-methyl-p-phenylendiamin | 2-Amino-terephthalsäuredistearylester | grüngelb |
| 29 | 4-Chlor-3-amino-benzoesäure | 2-Chlor-5-methyl-p-phenylendiamin | 4-Chlor-3-amino-benzoesäurestearylester | grüngelb |
| 30 | 4-Chlor-3-amino-benzoesäure | 2-Chlor-5-methyl-p-phenylendiamin | 4-Amino-benzoesäurestearylamid | grüngelb |
| 31 | 4-Chlor-3-amino-benzoesäure | 2-Chlor-5-methyl-p-phenylendiamin | 4-Stearoylaminoanilin | gelb |
| 32 | 4-Chlor-3-amino-benzoesäure | 2,5-Dichlor-p-phenylendiamin | 4-Methyl-3-amino-benzoesäurestearylamid | grüngelb |
| 33 | 4-Chlor-3-amino-benzoesäure | 2,5-Dichlor-p-phenylendiamin | 4-Methyl-3-amino-benzoesäure-n-tetradecanylester | grüngelb |

| Bsp. | I | II | III | IV |
|---|---|---|---|---|
| 34 | 4-Chlor-3-amino-benzoesäure | 2,5-Dichlor-p-phenylendiamin | 3-Amino-benzoesäure-stearylester | grüngelb |
| 35 | 4-Chlor-3-amino-benzoesäure | 2,5-Dichlor-p-phenylendiamin | 4-Methyl-3-amino-benzoe-säure-n-decanylester | grüngelb |
| 36 | 4-Chlor-3-amino-benzoesäure | 2,5-Dichlor-p-phenylendiamin | 4-Methyl-3-amino-benzoe-säurelaurylester | grüngelb |
| 37 | 4-Chlor-3-amino-benzoesäure | 2,5-Dichlor-p-phenylendiamin | 4-Methoxy-3-amino-benzoesäurestearylester | grüngelb |
| 38 | 4-Chlor-3-amino-benzoesäure | 2,5-Dichlor-p-phenylendiamin | 2-Amino-terephthalsäure-distearylester | grüngelb |
| 39 | 4-Chlor-3-amino-benzoesäure | 2,5-Dichlor-p-phenylendiamin | 4-Chlor-3-amino-benzoe-säurestearylester | grüngelb |
| 40 | 4-Chlor-3-amino-benzoesäure | 2,5-Dichlor-p-phenylendiamin | 4-Aminobenzoesäure-stearylamid | grüngelb |
| 41 | 4-Chlor-3-amino-benzoesäure | 2,5-Dichlor-p-phenylendiamin | 4-Stearoylaminoanilin | grüngelb |
| 42 | 4-Carbomethoxy-3-aminobenzoe-säure | 2,5-Dimethoxy-p-phenylendiamin | 4-Carbomethoxy-3-amino-benzoesäurestearylester | gelb |
| 43 | 4-Chlor-3-amino-benzoesäure | 2,5-Dimethyl-p-phenylendiamin | Anthranilsäurelaurylester | gelb |

Beispiel 44 : 6 g 3-(3'-Amino-4'-methoxy-benzoylamino)-4-methylbenzoesäurestearylester und 1,7 g 2,5-Dichlor-1,4-diacetoacetylamino-benzol werden in der Lösung aus 120 ml o-Dichlorbenzol und 12 ml Eisessig auf 70° erhitzt. Es entsteht eine leicht trübe gelbe Lösung. Man gibt in 10 Sekunden 1,46 ml tert.-Butylnitrit zu. Es fällt ein dicker gelber Niederschlag aus, die Temperatur steigt auf 72°. Die Suspension wird auf 117° erhitzt. Die geleeartige ockergelbe Suspension wird noch 1 Stunde bei dieser Temperatur gerührt, auf 80° abgekühlt und mit 120 ml Alkohol versetzt. Die Temperatur sinkt auf 40°. Der gelbe Niederschlag wird bei 40° abgenutscht, mit 250 ml Alkohol gewaschen und im Vakuum bei 60° getrocknet. Man erhält 6,3 g (86,1 % der Theorie) eines intensiv gelben Pulvers der Formel

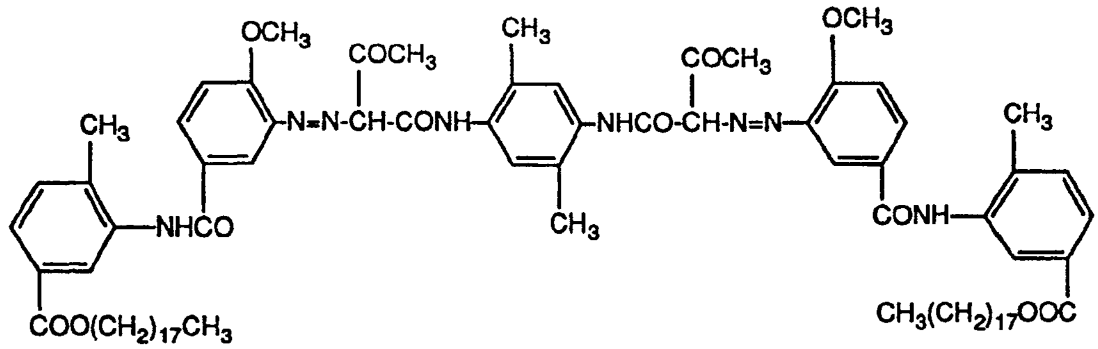

Analyse:

| | | | | |
|---|---|---|---|---|
| Ber. (in %): | C 66,88 | H 7,67 | Cl 4,81 | N 7,61 |
| Gef. (in %): | C 66,83 | H 7,89 | Cl 4,83 | N 7,61 |

Beispiele 45-48 : In nachstehender Tabelle sind weitere Verbindungen beschrieben, die durch Kuppeln im Molverhältnis 2 :1 der diazotierten Basen gemäss Kolonne I mit einem Bisacetessigsäurearylid eines Diamins der Kolonne II erhalten werden. Kolonne III gibt den Farbton der mit diesen Pigmenten gefärbten PVC-Folie an.

| Bsp. | I | II | III |
|---|---|---|---|
| 45 | 3-(3'-Amino-4'-methoxy-benzoylamino)-4-methyl-benzoesäurestearylester | 2-Chlor-5-methyl-p-phenylendiamin | grüngelb |
| 46 | 3-(3'-Amino-4'-methoxy-benzoylamino)-4-methyl-benzoesäurestearylester | 2,5-Dimethyl-p-phenylen-diamin | gelb |
| 47 | 3-(3'-Amino-4'-chlor-benzoylamino)-4-methyl-benzoesäurestearylester | 2,5-Dimethyl-p-phenylen-diamin | gelb |
| 48 | 3-(3'-Amino-4-methyl-benzoylamino)-4-methyl-benzoesäurestearylester | 2,5-Dimethoxy-p-phenylen diamin | orange |

Beispiel 49 : Verfährt man gleich wie in Beispiel 1, verwendet man aber anstelle des dort angegebenen Disazodicarbonsäuredichlorides eine entsprechende Menge des Disazodicarbonsäuredichlorides der Formel

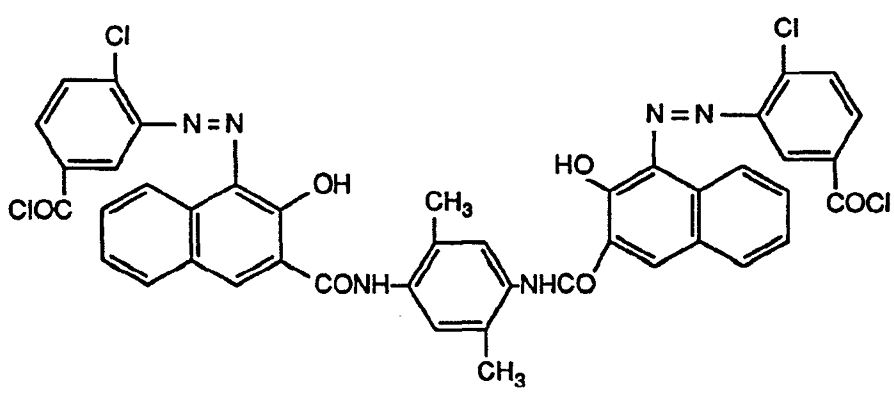

so erhält man ein rotes Pulver mit folgender Formel

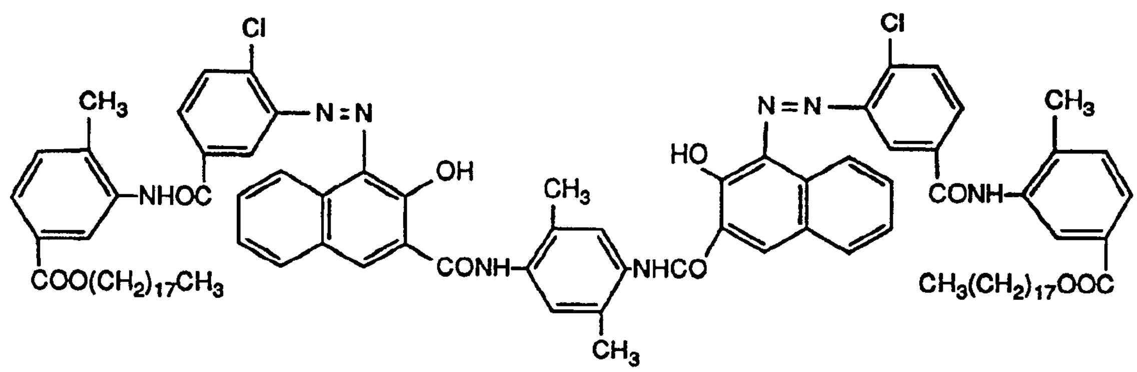

Es färbt Polyvinylchlorid in echten roten Tönen.

Beispiele 50-57 : In der folgenden Tabelle sind weitere Verbindungen beschrieben, die nach dem Verfahren des obigen Beispiels 49 hergestellt werden können, indem man die Diazoverbindung einer in der Kolonne I aufgeführten Amines auf das Bisnaphtholarylid des in der Kolonne II aufgeführten Diamins kuppelt, die so erhaltene Disazofarbstoffdicarbonsäure in ihr entsprechendes Dicarbonsäuredichlorid überführt, und dann dieses mit einem Amin der Kolonne III kondensiert. Kolonne IV gibt den Farbton der mit diesen Pigmenten gefärbten PVC-Folie an.

| Bsp. | I | II | III | IV |
|---|---|---|---|---|
| 50 | 4-Methyl-3-amino-benzoesäure | 2,5-Dimethyl-p-phenylendiamin | 4-Methyl-3-amino-benzoesäurestearylester | rot |
| 51 | 4-Chlor-3-amino-benzoesäure | 2,5-Dimethyl-p-phenylendiamin | 4-Methyl-3-amino-benzoesäure-n-tetradecanylester | braunrot |
| 52 | 4-Chlor-3-amino-benzoesäure | 2,5-Dimethyl-p-phenylendiamin | 3-Amino-benzoesäure-stearylester | rot |
| 53 | 4-Chlor-3-amino-benzoesäure | 2,5-Dimethyl-p-phenylendiamin | 4-Methyl-3-amino-benzoesäure-n-decanylester | braunrot |
| 54 | 4-Chlor-3-amino-benzoesäure | 2,5-Dimethyl-p-phenylendiamin | 4-Methoxy-3-amino-benzoesäurestearylester | rot |
| 55 | 4-Chlor-3-amino-benzoesäure | 2,5-Dimethyl-p-phenylendiamin | 4-Amino-benzoesäure-stearylester | braunrot |
| 56 | 4-Chlor-3-amino-benzoesäure | 2,5-Dimethyl-p-phenylendiamin | 4-Stearoylamino-anilin | braunrot |
| 57 | 4-Methyl-3-amino-benzoesäure | 2-Chlor-5-methyl-p-phenylendiamin | 4-Methyl-3-amino-benzoesäurestearylester | rot |

Beispiel 58 : Eine Mischung von 1,0 g des nach Beispiel 1 erhaltenen Disazokondensationpigmentes, 1,0 g Antioxidans ®IRGANOX 1010 (CIBA-GEIGY AG) und 1000 g Polyethylen HD Granulat (®VESTOLEN A60-16, HUELS) wird während 15 Minuten in einer 3 1-Glasflasche auf einer Rollbank vorgemischt. Danach wird die Mischung zweimal durch einen Einwellenextruder extrudiert. Das so erhaltene Granulat wird dann auf einer Spritzgussmaschine (®Allround Aarburg 200) bei 250°C mit einer Verweilzeit von 5 Minuten zu Platten verspritzt Die so erhaltenen Platten weisen gleichmässig farbstarke gelbe Färbungen hoher Reinheit und ausgezeichneter Lichtbeständigkeit auf.

Beispiel 59 : 40 mg des gemäss Beispiel 1 erhaltenen Disazokondensationspigmentes werden mit 7,3 ml Dioctylphthalat und 13,3 g eines stabilisierten Polyvinylchlorids vom Typ ®LONZA E-722 in einem Becherglas mit einem Glasstab gut vermischt. Das erhaltene Gemisch wird dann auf einem Walzenstuhl während 5 Minuten bei 160°C zu einer dünnen Folie verarbeitet. Die so erzeugte PVC-Folie weist eine sehr farbstarke gelbe Färbung hoher Reinheit und sehr guter Lichtbeständigkeit auf. Die Dispergierbarkeit des Pigmentes ist ausgezeichnet.

Beispiel 60 : 1000 g Polypropylengranulat (®DAPLEN PT-55, Chemie LINZ) und 1,0 g des nach Beispiel 1 erhaltenen Disazokondensationspigmentes werden in einer 3 1-Flasche während 15 Minuten auf dem Rollbock gemischt. Danach wird die Mischung zweimal durch einen Einwellenextruder extrudiert und anschliessend granuliert. Das so erhaltene Granulat wird bei 280-285°C nach dem Schmelzspinnverfahren versponnen. Die so gefärbten gelben Fasern weisen eine sehr gute Lichtbeständigkeit und ausgezeichnete textile Echtheiten, wie Reib- und Nassechtheiten gegenüber Wasch- und Lösungsmitteln, auf. Die Hitzebeständigkeit des Pigmentes während des Spinnprozesses bei 285°C ist ausgezeichnet.

Beispiel 61 : 100 g Polyamid ®GRILON A 25 (EMS-Chemie AG, Zürich) und 0,2 g des nach Beispiel 1 erhaltenen Disazokondensationspigmentes werden auf einem Laborturbulamischer (W.A. Bachofen, Basel) während 20 Minuten gut vermischt. Danach wird die Mischung auf einem Einwellenextruder bei 240°C extrudiert. Das so erhaltene Band weist eine gelbe Färbung auf und zeigt gute Lichtbeständigkeiten.

Beispiel 62 : Verfährt man analog wie in Beispiel 58 beschrieben, verwendet aber neben dem Buntpigment 10 g Titandioxid ®KRONOS RN-57-P (KRONOS Titan GmbH), so erhält man gelbe Pressplatten mit ebensoguten Hitzebeständigkeiten. Die zwischen 200 und 280°C gespritzten Pressplatten weisen nach dem Erkalten keine Farbabweichungen auf.

## Patentansprüche

1. Verbindungen der Formel I

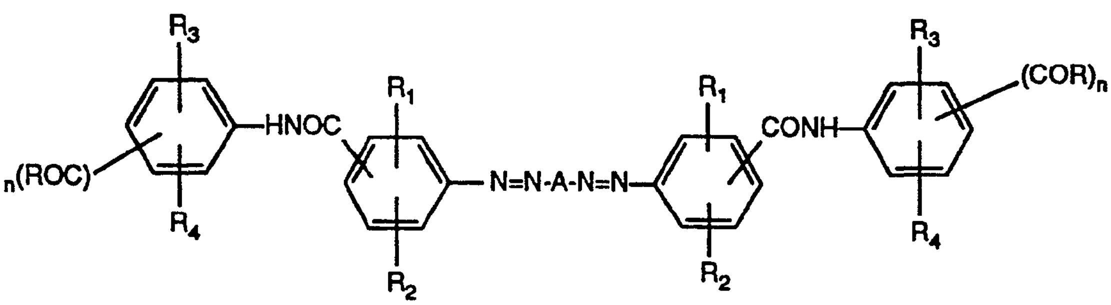
,

(I)

worin R für einen Rest der Formeln $-OR_5$ oder $-NHR_5$ steht, A einen Rest der Formeln II oder III

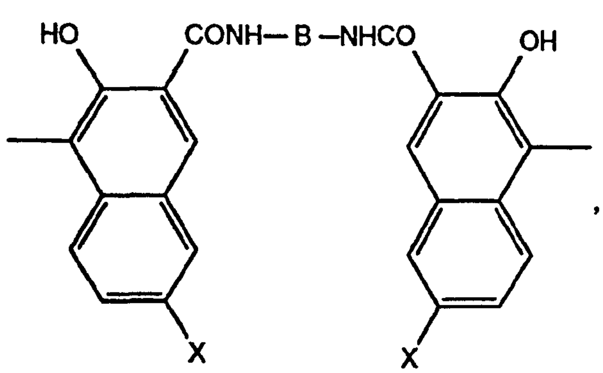
,
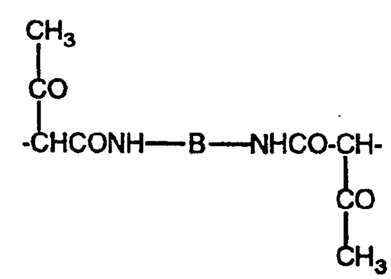

(II) (III)

darstellt, wobei B einen Rest der Formeln

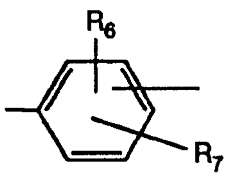 , 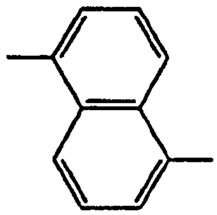 oder 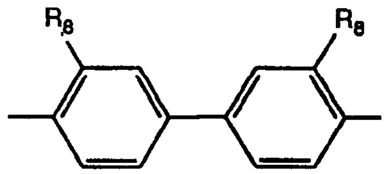 bedeutet,

wobein die Zahl 1 oder 2 ist,
$R_1$ und $R_3$ unabhängig voneinander -H oder -Cl,
$R_2$ und $R_4$ unabhängig voneinander -H, Halogen, $-NO_2$, -CN, $C_1$-$C_4$-Alkyl, $C_1$-$C_4$-Alkoxy, $-CF_3$, $C_2$-$C_5$-Alkoxycarbonyl, oder unsubstituiertes oder am Phenylkern durch ein oder zwei Chloratome oder eine oder zwei Methyl-, Methoxy- oder Ethoxygruppen substituiertes -CONH-Phenyl, -NHCO-Phenyl oder Phenyloxy,
$R_5$ Akyl mit mindestens 10 C-Atomen,
$R_6$ und $R_7$ unabhängig voneinander -H, Halogen, $-NO_2$, -CN, $-CF_3$, $C_1$-$C_4$-Alkyl oder $C_1$-$C_4$-Alkoxy,
$R_8$ -H, -Cl, -Br, $-CH_3$ oder $-OCH_3$, und
X -H, -Br, $-OCH_3$, -CN oder $-NO_2$ bedeuten.

2. Verbindungen gemäss Anspruch 1, wobei die Formel I folgende Struktur

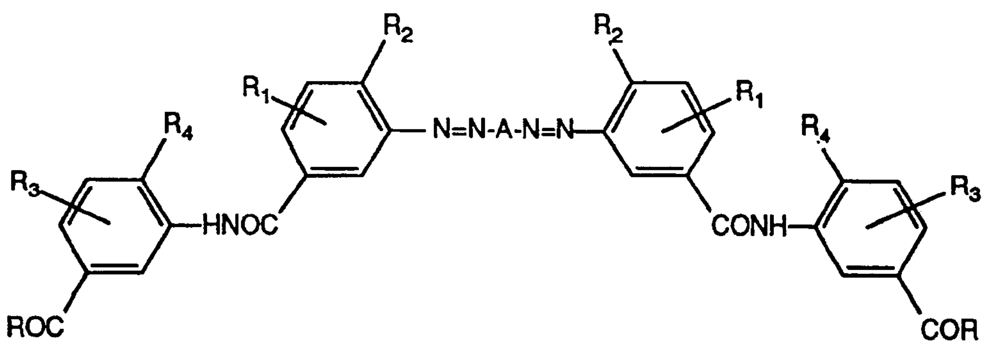

aufweist, und die Gruppen R, $R_1$, $R_2$, $R_3$, $R_4$ und A die im Anspruch 1 angegebene Bedeutung haben.

3. Verbindungen gemäss Anspruch 1, wobei die Formeln II und III folgende Strukturen

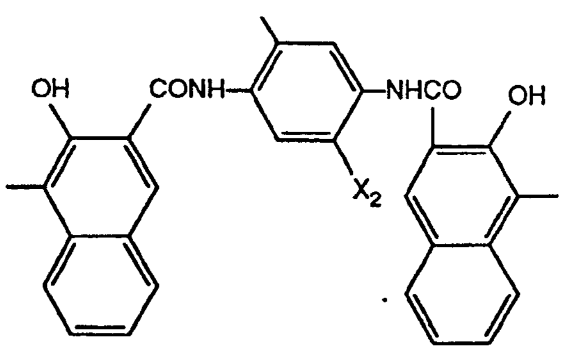 , 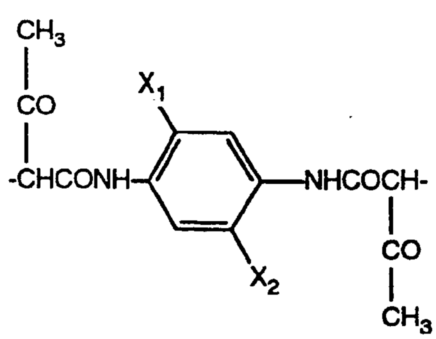

aufweisen und die Gruppen $X_1$ und $X_2$ unabhängig voneinander -H, Halogen, $-NO_2$, -CN, $-CF_3$, $C_1$-$C_4$-Alkyl oder $C_1$-$C_4$-Alkoxy bedeuten.

4. Verbindungen gemäss Anspruch 1, wobei sie die Formel IV

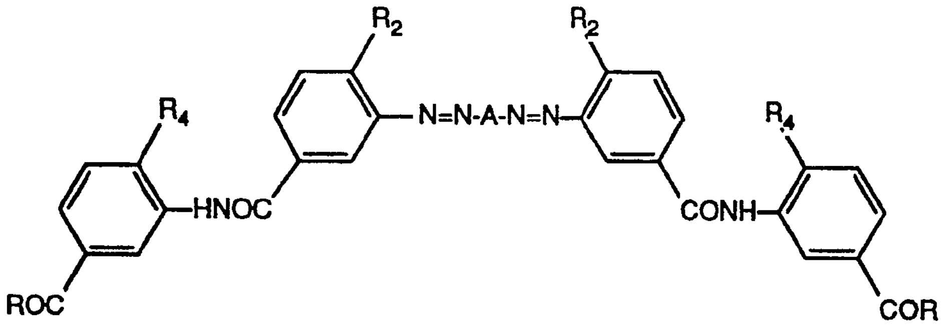

(IV) aufweisen,

worin A für einen Rest der Formeln V oder VI

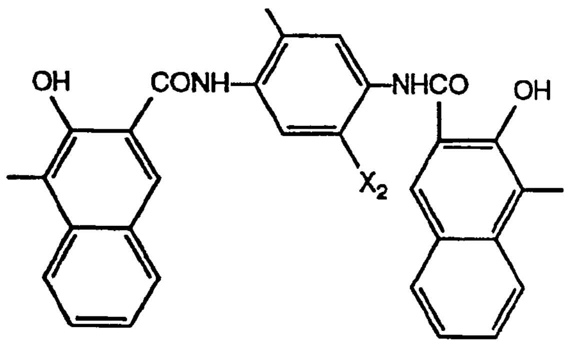

(V)

,

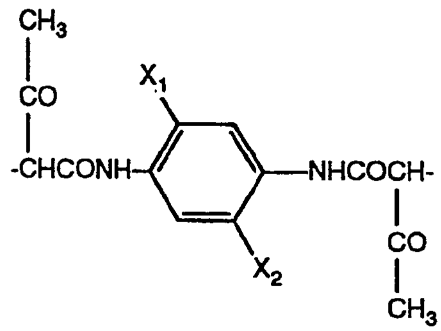

(VI)

steht, wobei R für einen Rest der Formeln $-OR_5$ oder $-NHR_5$ steht, $R_2$ und $R_4$ unabhängig voneinander -H, -Cl, $-CH_3$, $-OCH_3$, $-OC_2H_5$, $-COOCH_3$, $-COOC_2H_5$ oder $-OC_6H_5$, $R_5$ $C_{12}$-$C_{35}$-Alkyl, und $X_1$ und $X_2$ unabhängig voneinander -H, -Cl, $-CH_3$, $-OCH_3$ oder $-OC_2H_5$ bedeuten.

5. Verbindungen gemäss Anspruch 4, wobei R für einen Rest der Formel $-OR_5$ steht, und die übrigen Reste die im Anspruch 4 angegebene Bedeutung haben.

6. Verbindungen gemäss Anspruch 4, wobei A für einen Rest der Formel V steht, und die übrigen Gruppen die im Anspruch 4 angegebene Bedeutung haben.

7. Verbindungen gemäss Anspruch 4, wobei A für einen Rest der Formel V steht, $R_2$ -Cl, $-CH_3$ oder $-OCH_3$, $R_4$ -Cl, $-CH_3$, $-OCH_3$, $-COOCH_3$ oder $-COOC_2H_5$, $R_5$ $C_{12}$-$C_{18}$-Alkyl, und $X_1$ und $X_2$ unabhängig voneinander -H, -Cl, $-CH_3$ oder $-OCH_3$ bedeuten.

8. Verbindungen der Formel VII

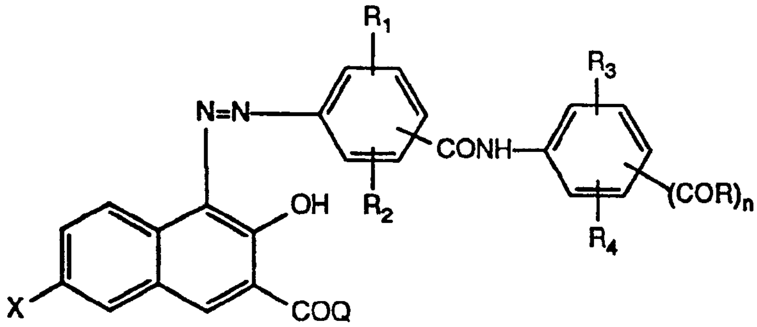

(VII),

worin n die Zahl 1 oder 2 ist, R für einen Rest der Formeln $-OR_5$ oder $-NHR_5$ steht, $R_1$ und $R_3$ unabhängig voneinander -H oder -Cl, $R_2$ und $R_4$ unabhängig voneinander -H, Halogen, $-NO_2$, -CN, $C_1$-$C_4$-Alkyl, $C_1$-$C_4$-

Alkoxy, $-CF_3$, $C_2$-$C_5$-Alkoxycarbonyl oder unsubstituiertes oder am Phenylkern durch ein oder zwei Chloratome oder eine oder zwei Methyl-, Methoxy- oder Ethoxygruppen substituiertes -CONH-Phenyl, -NHCO-Phenyl oder Phenyloxy, $R_5$ Alkyl mit mindestens 10 C-Atomen, X -H, -Br, $-OCH_3$, -CN oder $-NO_2$, und Q -OH oder Halogen bedeuten.

**9.** Verbindungen gemäss Anspruch 8, wobei Q -Cl bedeutet.

**10.** Verbindungen gemäss Anspruch 8, worin die Formel VII die Struktur VIII

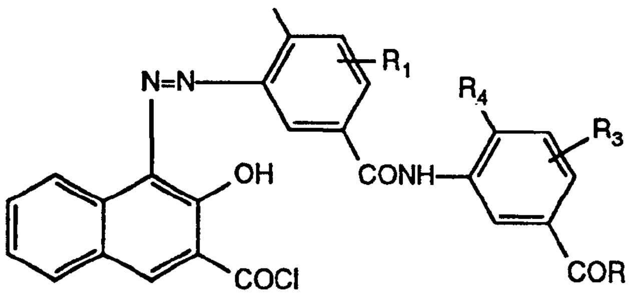

(VIII) aufweist, wobei

R, $R_1$, $R_2$, $R_3$ und $R_4$ die im Anspruch 8 angegebene Bedeutung haben.

**11.** Verbindungen gemäss Anspruch 10, wobei $R_1$ und $R_3$ -H, $R_2$ -Cl, $-CH_3$ oder $-OCH_3$, und $R_4$ -Cl, $-CH_3$, $-OCH_3$, $-COOCH_3$ oder $-COOC_2H_5$ bedeuten, und R für einen Rest der Formel $-OR_5$ steht, wobei $R_5$ $C_{12}$-$C_{18}$-Alkyl bedeutet.

**12.** Verwendung der Verbindungen gemäss Anspruch 1 zum Färben von hochmolekularem organischem Material.

**13.** Verwendung gemäss Anspruch 12, dadurch gekennzeichnet, dass das organische Material ein Polyolefin ist.

**14.** Hochmolekulares organisches Material enthaltend eine Verbindung gemäss Anspruch 1.